# EUROPÄISCHE PATENTSCHRIFT

(11) **EP 3 061 518 B1**
(45) Veröffentlichungstag und Bekanntmachung des Hinweises auf die Patenterteilung: **07.08.2019**
(21) Anmeldenummer: 16157263.1
(22) Anmeldetag: 25.02.2016
(51) Int. Cl.: B01D 61/44, C01D 5/02, C25B 1/16

(54) **VERFAHREN ZUR ELEKTRODIALYTISCHEN HERSTELLUNG VON LITHIUMHYDROXID-HALTIGEN WÄSSRIGEN LÖSUNGEN AUS VERUNREINIGTEN LITHIUMHALTIGEN WÄSSRIGEN DILUATEN**
METHOD FOR THE ELECTROLYTIC PRODUCTION OF LITHIUM HYDROXIDE-CONTAINING AQUEOUS SOLUTIONS FROM CONTAMINATED AQUEOUS DILUATES CONTAINING LITHIUM
PROCEDE DE PRODUCTION ELECTRODIALYTIQUE DE SOLUTIONS AQUEUSES CONTENANT DE L'HYDROXYDE DE LITHIUM A PARTIR DE PRODUITS DILUES AQUEUX CONTENANT DU LITHIUM CONTAMINE

(30) Priorität: 25.02.2015 DE 102015203395
(43) Veröffentlichungstag der Anmeldung: 31.08.2016
(73) Patentinhaber: Technische Universität Bergakademie Freiberg, 09599 Freiberg (DE)
(72) Erfinder: Bertau, Martin, Prof. Dr., 09599 Freiberg (DE); Martin, Gunther, 09599 Freiberg (DE)
(74) Vertreter: Kailuweit & Uhlemann Patentanwälte Partnerschaft mbB

(56) Entgegenhaltungen:
- JP-B1- 5 138 822
- KR-A- 20130 092 323
- A D Ryabtsev ET AL: "070-4272/04/7707-1108 C2004 MAIK [Nauka/Interperiodica] Preparation of High-Purity Lithium Hydroxide Monohydrate from Technical-Grade Lithium Carbonate by Membrane Electrolysis", Russian Journal of Applied Chemistry Translated from Zhurnal Prikladnoi Khimii, 1. Januar 2004 (2004-01-01), Seiten 1108-1116, XP055281011, Gefunden im Internet: URL:http://link.springer.com/content/pdf/1 0.1023/B:RJAC.0000044158.61704.93.pdf

## Beschreibung

Die vorliegende Erfindung betrifft ein Verfahren zur elektrodialytischen Herstellung lithiumhydroxidhaltiger Lösungen aus wässrigen, mit Fremdstoffen verunreinigten Diluaten, welche primären Ursprungs sein können oder aus Recyclingprozessen stammen.

Zur Gewinnung von Lithium aus beispielsweise Erzen, Salaren oder Recyclingstoffen gibt es verschiedene Möglichkeiten.

Beispielsweise kann Lithium in Form von Lithiumcarbonat durch hydrometallurgischen oder pyrometallurgischen Aufschlussverfahren erhalten werden, wie es in der DE 3622105 A1 offenbart ist. Dabei fallen beim Aufschluss mineralischer lithiumhaltiger Erze zumeist sulfatisch vorliegende lithiumhaltige Lösungen an, aus welchen nach diversen Reinigungsschritten durch Zugabe von Soda Lithiumcarbonat gewonnen wird.

Die US 6143260 beschreibt ein Verfahren zur Gewinnung von Lithiumhydroxid aus lithiumhaltigen Salaren wird nach Eindampfung der chloridisch vorliegenden Lösung und Abtrennung von Nebenkomponenten. Die Lithiumcarbonatfällung aus eingedampften wässrigen Lösungen mittels Soda findet bei Temperaturen < 90°C statt, wodurch neben Kosten für das Fällungsmittel auch erhebliche Energiekosten anfallen.

Das technisch vorliegende Lithiumcarbonat muss im Anschluss noch durch Umkristallisation bzw. Kohlendioxideinleitung bei der Reinigung über wasserlösliches Lithiumhydrogencarbonat als Zwischenprodukt gereinigt werden und wird u. a. zur Herstellung von Kathodenmaterialien für Akkumulatoren eingesetzt, wie beispielsweise in der US 6048507 offenbart.

Da Lithiumhydroxid ebenfalls als Ausgangsstoff für die Herstellung von Kathodenmaterialien (u. a. Lithiumeisenphosphat) verwendet wird, bietet sich die direkte Darstellung von Lithiumhydroxid aus Lösungen an, welche Lithiumsulfat, -chlorid oder -nitrat enthalten. Technische Verfahren hierzu sind hinlänglich bekannt, wobei die elektrolytische **(**US 3597340**,** US 20110044882**)** und elektrodialytische Darstellung **(**DE 102009010264A1**,** US 20110203929 A1**)** zu bevorzugen sind.

Bei der elektrolytischen Darstellung von Lithiumhydroxid, wie in US 20110044882 offenbart, erweisen sich vor allem niedrige Lithium-Ausgangskonzentrationen als nachteilig auf die erzielbare Ausbeute, sodass die Ausgangslösung zunächst aufkonzentriert werden muss. Anschließend erfolgt eine zweistufige Abtrennung von Verunreinigungen u. a. durch pH-Wert-Erhöhung auf pH 10,0 bis 11,0. Nach Neutralisation durch Säurezugabe erfolgt im zweiten Reinigungsschritt mittels Ionenaustauscher die Abtrennung von Calcium und Magnesium, bevor die Elektrolyse zur Darstellung von Lithiumhydroxid unter Bildung von Wasserstoff und Chlorgas als Nebenprodukte erfolgt. Nachteilig bei diesem Verfahren sind die aufwendige Vorbehandlung zur Aufkonzentrierung und Aufreinigung der Lösung, sowie die geringere Stromausbeute der Elektrolyse im Vergleich zur Elektrodialyse.

Bei der elektrodialytischen Darstellung von Lithiumhydroxidlösungen **(**DE 102009010264 A1**)** wird unter Verwendung von bipolaren Membranen **(**DE 102004012334 A1**),** die salzhaltige Ausgangslösung in Säuren und Basen aufgespalten. Durch Anlegen eines elektrischen Feldes setzt ein lonentransport ein, wobei Anionen zur Anode und Kationen zur Kathode wandern. Unter zusätzlicher Verwendung von lonenaustauschermembranen (Anionenaustauschermembranen - hohe Permeabilität für Anionen, Kationenaustauschermembranen - hohe Permeabilität für Kationen) erfolgt eine Auftrennung in die Stoffströme Diluat (abgereicherte lithiumhaltige Lösung), Säure und Base (Lithiumhydroxidlösung). Die alternierend angeordneten Membranen werden in einem Membranstack eingefasst. (K. Ohlrogge (Ed.) Membranen. Grundlagen, Verfahren und industrielle Anwendungen, Wiley-VCH, Weinheim, 2006, 429)

Die erhaltene Lithiumhydroxidlösung kann auf technisch bekannten Wegen eingedampft, Lithiumhydroxid als Monohydrat kristallisiert und dabei aufgrund von Löslichkeitsunterschieden von anderen Alkalihydroxiden getrennt werden. Anschließend werden durch Standardreinigungsverfahren, wie Umkristallisation, die gewünschten Produktreinheiten erreicht.

Die Anwendbarkeit des elektrodialytischen Prozesses ist jedoch bisher auf hochreine Ausgangslösungen beschränkt. Verunreinigungen durch höherwertige Kationen in der Ausgangslösung, wie z. B. Magnesium, Eisen, Aluminium oder Calcium, welche im Prozess schwerlösliche Hydroxidverbindungen bilden, sind im Vorfeld durch aufwendige Aufreinigungsverfahren in den Bereich < 1 bis 5 ppm abzutrennen. Aufgrund der geringen Löslichkeit vieler Metallhydroxide treten bei unzureichender vorheriger Abtrennung Metallhydroxidausfällungen auf den Membranen auf (Membranscaling), welche die eingesetzten Membranen dauerhaft schädigen. Eisen(III)-hydroxid nimmt mit einer Löslichkeit von 0,000021 mg/L bei 20°C eine Sonderstellung ein und muss daher bis in den ppb-Bereich abgetrennt werden (M. Bailly, Desalination 2002, 144, 157-162.)

In US 2011/0203929 A1 wird die Vorreinigung durch pH-Wert-Erhöhung auf 10,0 bis 11,0, Filtration und anschließender Absenkung des pH-Wertes auf 1 bis 4 realisiert. Unter Verwendung der gängigsten Base (Natriumhydroxid) werden enorme Mengen an Natrium-Kationen eingetragen, welche während der Elektrodialyse nicht von Lithium separiert werden können und somit unter Zuführung von Energie ebenfalls in die Base überführt werden. Zur Verhinderung dieser Zufuhr ließe sich alternativ auch Lithiumhydroxid einsetzen (aus ED-Prozess zurückgekreist), allerdings sinkt hierdurch die effektive Stromausbeute bezüglich des gewonnen Produktes erheblich, da nicht zu vernachlässigbare Mengen mehrfach durch die Elektrodialyse geführt werden müssen. Außerdem sind erhebliche Mengen an Säuren für die anschließende pH-Wert-Senkung notwendig.

In WO 2013159194 A1 wird ein Prozess zur Gewinnung von Lithiumhydroxid aus lithiumchloridhaltiger Lösung offenbart, wobei aufwendigen Aufbereitungsverfahren der Ausgangslösung beschrieben sind. Aufgrund der geringen tolerierbaren Gehalte sind mehrere Prozessschritte notwendig, um die Verunreinigungen bis teilweise in den ppb-Bereich abtrennen zu können. Zunächst erfolgt im ersten dreistufigen Reinigungsschritt durch Hydroxidfällung eine Abreicherung von Eisen(III) und Aluminium(III) durch Zugabe von Kalkmilch (pH-Anhebung auf 5,6). Die Suspension wird nach Filtration und Filterkuchenwäsche dem zweiten Reinigungsschritt zugeführt. Hierbei wird im dreistufigen Prozess zunächst der pH-Wert mit Natriumhydroxid auf pH=10 angehoben und anschließend werden durch Zugabe von Soda schwerlösliche Carbonate ausgefällt. Nach einer erneuten Filtration erfolgt mittels Ionenaustauscher die weitere Reinigung. Nach dem vierten Umlauf wird eine lithiumsulfathaltige Lösung mit einem Li-Gehalt von 15,7...21,9 g/L, bei 2,4...5,7 mg/L Ca und Mg, 3,5 g/L Na und K, < 0,2 mg/L Fe und < 0,8 mg/L Al erhalten.

WO 2014/138933 A1 offenbart ein Verfahren zur Herstellung von Lithiumhydroxid wobei eine Lösung von Lithiumsulfat elektrolytisch oder elektrodialytisch in Lithiumhydroxid und Schwefelsäure aufgetrennt wird.

Die Gründe dass bislang keine weitere Skalierung zur großtechnischen Umsetzung des Elektrodialyse bzw. Elektrolyse-Prozesses zur Lithiumhydroxid-Gewinnung durchgeführt wurde sind in den hohen Reinheitsanforderungen geeigneter Ausgangslösungen zu finden. Im ersten Aufreinigungsschritt erfolgt unter Zugabe von Kalkmilch zur pH-Anhebung auf pH = 5,6 eine Ausfällung von Eisen- und Aluminiumhydroxid. Das Filtrat wird dem zweiten Reinigungsschritt zugeführt, wobei in einem dreistufigem Prozess zunächst der pH-Wert durch Natriumhydroxid-Zugabe auf pH = 10 eingestellt und anschließend durch Zugabe von Soda schwerlösliche Carbonate ausgefällt werden. Danach erfolgt mittels Ionenaustauscher die weitere Aufreinigung, bis nach mehreren lonenaustauscherstufen geeignete Ausgangslösungen erhalten werden.

Nachteilig ergibt sich daraus ein enormer technologischer Aufwand. Zum einen werden grosse Mengen an Base (Ca(OH)₂, NaOH) zur Neutralisation, sowie Soda zur Carbonatfällung verbraucht, zum anderen stellt ein mehrstufiger lonenaustauscherprozess einen äußerst investitions-, betriebskostenintensiven Prozess dar.

Serikova et al. (Russian Journal of Applied Chemistry, Vol. 77, No. 7, 2004, 14108 - 1116) beschreiben ein Verfahren zur Herstellung von hochreinem Lithiumhydroxid Monohydrat aus Lithiumcarbonat über eine Elektrolyse. Dabei wird eine Lithiumcarbonatlösung durch die zentrale Kammer einer Drei-Kammer-Elektrolysezelle geleitet, die durch lonenaustauschermembranen voneinander getrennt sind und wobei sich in der Kathodenkammer Lithiumhydroxid und in der Anodenkammer die korrespondierenden Säuren bilden.

KR 2013 0092323 offenbart ein ähnliches Prinzip. Beschrieben wird ein Verfahren und Vorrichtung zur Herstellung von Lithiumhydroxid bzw. -carbonat aus einer verunreinigten Lithiumphosphat Ausgangslösung. Vor Beginn des eigentlichen Prozesses wird diese Lithiumphosphatlösung zunächst durch Fällung von störenden Kationen wie Magnesium, Calcium und Natrium durch bekannte Methoden bereinigt.

Anschliessend wird die Lithiumphosphatlösung in die zentrale Salzkammer einer dreiteiligen Elektrolysezelle, bestehend aus Anionenkammer, Salzkammer und Kationenkammer geleitet, wo die Auftrennung in Lithium-Ionen und Phosphationen erfolgt. Dazu passieren die Lithiumionen eine an die Salzkammer angrenzende Kationenaustauschermembran und gelangen in die Kationenkammer zur Bildung von LiOH, während die Phosphationen eine auf der anderen Seite an die Salzkammer angrenzende Anionenaustauschermembran passieren und zu Phosphorsäure reagieren.

Die entstehende Lithiumhydroxid-Lösung wird vor der Weiterverarbeitung durch eine Einheit zum Filtrieren gelenkt.

JP 5138822 beschreibt ein Verfahren zur Herstellung von Lithiumhydroxid aus Lithiumcarbonatlösung durch Elektrodialyse, wobei Lithiumcarbonat durch die Rohmaterial-Kammer einer Elektrodialysezelle mit Kationen- und Anionenaustauschermembran geleitet wird. Durch lonenmigration gelangen die Lithiumionen in die Kationenkammer und reagieren dort zu Lithiumhydroxid. Der pH Wert des Rohmaterial-Stromes muss dabei permanent über pH = 9 gehalten werden.

JP 2014-173144 A offenbart ebenfalls ein Verfahren zur Herstellung von Lithiumhydroxid mittels Elektrodialyse. Dabei wird eine Lösung, enthaltend ein Lithiumsalz durch eine Elektrodialysekammer geleitet, in Lithiumkationen und Säureanionen aufgetrennt und die Lithiumkationen durch eine Kationenaustauschermembran in eine Kammer mit alkalischer Lösung, enthaltend Lithiumhydroxid geleitet. Dadurch kommt es zur Aufkonzentration der Lithiumhydroxidlösung. Vor der elektrodialytischen Auftrennung wird die Rohmaterial-Lösung durch einen Filter mit einem Porendurchmesser von 0.5 µm geleitet um ungelöste Bestandteile abzutrennen.

Die Kombination von bipolaren Membranen und monoselektiven Kationenaustauschermembranen, wie die Neosepta® CMS, Tokuyama Corporation, ist technisch bekannt. Hierdurch lässt sich die Bildung schwerlöslicher mehrwertiger Metallhydroxide, insbesondere von Magnesium(II), Aluminium(III), Mangan(II), Eisen(II) etc., eindämmen und somit den Reinigungsaufwand im Vorfeld reduzieren. Nachteilig ist die Selektivität von Neosepta® CMS-Membranen für einwertige Kationen nicht 100 %. Praktisch konnten Selektivitäten von 90 bis 96 % ermittelt werden, sodass insbesondere bei Vorliegen von Eisen(III) in der lithiumhaltigen Ausgangslösung dennoch äußerst effektive, teils mehrstufige Reinigungsverfahren zur Eisen(III)-Abtrennung bis in den ppb-Bereich angewandt werden müssen. Weiterhin ist nachteilig, dass eine zusätzliche Membran verwendet werden muss, was wiederum mit höheren Kosten verbunden ist.

Der vorliegenden Erfindung liegt die Aufgabe zugrunde ein elektrodialytisches Verfahren zur Herstellung von lithiumhydroxidhaltigen wässrigen Lösungen aus einem mit Fremdstoffen verunreinigten lithiumhydroxidhaltigen Diluat bereitzustellen.

Erfindungsgemäß wird die Aufgabe durch ein Verfahren mit den Merkmalen nach Anspruch 1 und durch eine Vorrichtung mit den Merkmalen nach Anspruch 6 gelöst. Weitere Ausgestaltungen des Verfahrens und der Vorrichtung beinhalten die Merkmale der Ansprüche 2 bis 5 und 7 bis 9.

Beim elektrodialytischen Verfahren, bei dem ein verunreinigtes, lithiumhaltiges, wässriges Diluat elektrodialytisch durch mindestens eine Elektrodialysezelle in ein lithiumhydroxidhaltiges wässriges Konzentrat und eine Säure getrennt wird und dabei Diluat, Konzentrat und Säure in drei unabhängigen Prozessströmen im kontinuierlichen Kreislauf geführt werden, wird der Prozessstrom des Konzentrats kontinuierlich durch eine Einheit zum Filtrieren gelenkt.

Elektrodialytische Verfahren, auch Elektrodialyse genannt, bezeichnen erfindungsgemäß eine dem Fachmann bekannte Methode zur Entfernung ionischer Komponenten aus wässrigen Lösungen durch deren Transport über Ionenaustauschermembranen, die sich in einer Elektrodialysezelle befinden, unter der Triebkraft eines elektrischen Feldes.

Verunreinigtes, lithiumhaltiges, wässriges Diluat bezeichnet im Sinne der Erfindung eine Lösung auf Basis von Wasser, die mindestens Lithiumionen und mindestens ein Gegenion (Anion), bevorzugt ausgewählt aus Chlorid, Sulfat, Nitrat und Phosphat, aufweist. Des Weiteren kann die Lösung Verunreinigungen in Form von Fremdionen, wie beispielsweise Magnesium-, Eisen-, Aluminium-, Mangan- und/oder Calciumionen in unterschiedlicher Oxidationsstufe aufweisen. Bevorzugt liegen im wässrigen Diluat Eisen(III), Aluminium(III), Magnesium(II), Mangan(II) und/oder Eisen(II) vor.

Bevorzugt beträgt der Lithiumgehalt im wässrigen Diluat mindestens 10 mg Lithium. Die maximale Löslichkeit ist durch das Löslichkeitsprodukt des jeweiligen Lithiumsalzes gegeben. Dem Fachmann sind die Löslichkeiten verschiedener Salze bekannt, wie beispielsweise: LiCI: 832 g/L, Li₂SO₄: 350 g/L und LiNO₃: 522 g/L. Besonders bevorzugt beträgt der Lithiumgehalt im Diluat 1 g/L bis 20 g/L.

Lithiumhaltiges, wässriges Konzentrat bezeichnet erfindungsgemäß die wässrige Lösung, die beim Verfahren entsteht. Dabei handelt es sich um ein Konzentrat, welches Lithiumhydroxid in gelöster Form enthält. Neben gelöstem Lithiumhydroxid (LiOH) können beispielsweise Kaliumhydroxid (KOH), Rubidiumhydroxid (RbOH), Cäsiumhydroxid (CsOH), Anionen wie beispielsweise Chlorid-, Sulfat- und/oder Nitrat- und/oder andere mehrwertige Metallhydroxide enthalten sein.

Säure bezeichnet im Sinne der Erfindung eine anorganische Säure, die bekanntermaßen als Nebenprodukt bei der Elektrodialyse entsteht. Welche Säure gebildet wird, hängt von der Art des eingesetzen Diluats (bzw. den enthaltenen Anionen) ab. Enthält das Diluat beispielsweise Lithiumchlorid, so wird entsprechend Salzsäure gebildet.

Kontinuierlicher Kreislauf bezeichnet im Sinne der Erfindung, dass die Prozessströme für einen begrenzten Zeitraum ohne Unterbrechung den Kreislauf durchströmen.

Einheit zum Filtrieren bezeichnet erfindungsgemäß eine Vorrichtung, mit der Feststoffe aus einem Feststoff-Flüssigkeitsgemisch (Suspension) abgetrennt werden können. Dem Fachmann sind dazu verschiedene Geräte, wie beispielsweise eine Fritte, bekannt. Bevorzugt ist die Einheit zum Filtrieren eine Fritte.

Erfindungsgemäß wird der Prozessstrom des Konzentrates durch die Einheit zum Filtrieren gelenkt.

Dabei werden vorteilhaft schwerlösliche Hydroxide aus den Fremdionen mittels der Einheit zum Filtern von dem Konzentrat entfernt. Bevorzugt werden Eisenhydroxid, Lithiumsulfat und/oder Calciumsulfat abgetrennt.

In einer bevorzugten Ausgestaltung der Erfindung werden der Prozessstrom des Diluates und/oder der Prozessstrom der Säure durch jeweils eine Einheit zum Filtrieren gelenkt.

Vorteilhaft können durch die Filtration des Diluatkreislaufes (z. B. enthaltendd Li₂SO₄) lokale Ausfällungen, die zu Beginn des Verfahrens auftreten können, aus dem Prozesskreislauf entfernt werden. Lokale Ausfällungen entstehen beispielsweise, wenn das Diluat nahe der Löslichkeit (Sättigungskonzentration) eines Salzes (z. B. Li₂SO₄) eingesetzt wird. Außerdem können auch andere schwer lösliche Nebenkomponenten, wie beispielsweise CaSO₄ (Löslichkeit 2,5 g/L), entfernt werden. Dies empfiehlt sich insbesondere in Kombination mit monoselektiven Kationenaustauschermembranen. Diese Membranen weisen eine hohe Selektivität für einwertige Kationen auf und halten mehrwertige Kationen wie Ca²⁺ weitestgehend zurück. Durch die Migration der einwertigen Kationen und deren Hydrathüllen, kommt es zu einer Volumenverkleinerung des Wassers im Diluat-Kreislauf, wodurch die Sättigungskonzentrationen von mehrwertigen Salzen (u.a. CaSO₄) überschritten werden kann und Ausfällungen kontinuierlich auftreten.

In einer besonderen Ausgestaltung der Erfindung werden alle drei Prozessströme durch jeweils eine Einheit zum Filtrieren gelenkt.

Vorteilhaft werden somit alle drei Prozessströme gleichzeitig von den jeweils störenden Feststoffen befreit.

Vorteilhaft werden die einzelnen Membranen (Ionenaustauschermembranen) nicht mehr durch die schwer löslichen Hydroxide zugesetzt, wodurch diese länger zur Elektrodialyse genutzt werden können.

Bevorzugt weist das lithiumhaltige, wässrige Diluat einen pH Wert von 0 bis 11, besonders bevorzugt von 0 bis 5, noch mehr bevorzugt von 0 bis 3 auf.

Bevorzugt werden die Prozessströme unter vermindertem Druck kontinuierlich durch die jeweilige Einheit zum Filtrieren geleitet.

Bevorzugt wird der Prozessstrom unter vermindertem Druck, besonders bevorzugt bei 50 mbar bis 900 mbar, ganz besonders bevorzugt bei 300 mbar bis 700 mbar kontinuierlich durch die Einheit zum Filtrieren geleitet.

Verminderter Druck bezeichnet im Sinne der Erfindung einen Druck unterhalb des Normaldrucks (1,013 mbar).

In einer besonderen Ausgestaltung der Erfindung wird der Prozessstrom bei Normaldruck oder erhöhtem Druck durch die Einheit zum Filtrieren geleitet.

Erhöhter Druck bezeichnet im Sinne der Erfindung einen Druck oberhalb des Normaldruckes.

Bevorzugt wird mit erhöhtem Druck von 0,1 bis 30 bar, besonders bevorzugt von 0,5 bis 6 bar filtriert.

Bevorzugt ist die Einheit zum Filtrieren eine Fritte mit einer Porengröße von 10 bis 100 µm, besonders bevorzugt von 16 bis 40 µm geleitet.

Die Porengröße wird der Fachmann so wählen, dass störende fremdionische Hydroxide (andere als Lithiumhydroxid) aus dem jeweiligen Prozessstrom abgetrennt werden.

Bevorzugt wird der Prozessstrom des Diluates auf einen pH-Wert von 0 bis 14, besonders bevorzugt auf 1 bis 10, ganz besonders bevorzugt auf 1 bis 4 eingestellt.

Vorteilhaft kann durch einen niedrigen pH-Wert die Fällung fremdionischer Hydroxide verhindert werden.

Dem Fachmann sind Methoden zum Messen eines pH-Wertes bekannt. Er weiß, dass er zur pH-Wert-Erniedrigung eine Säure zugeben muss, während eine pH-Wert-Erhöhung mittels Basenzugabe erfolgen kann.

Beispielsweise kann der pH-Wert mittels Schwefel-, Salz- oder Salpetersäure eingestellt werden. Vorteilhaft kann die Salzsäure, die während der Elektrodialyse entsteht, zur pH-Wert-Einstellung verwendet werden. Bevorzugt wird die Salzsäure mit einer Konzentration von 1 mol/l verwendet.

Während der Dialyse wird der pH-Wert konstant gehalten.

Zur wirtschaftlichen Prozessfahrweise wird bei einem Lithium-Umsatz von 90 bis 95 % die elektrodialytische Umsetzung beendet, um ein starkes Absinken der Stromausbeute zu verhindern. Aus dem gleichen Grund wird sowohl die Lithiumhydroxid-Konzentration im Basenkreislauf als auch die Schwefelsäure-Konzentration im Säurekreislauf auf max. 1 bis 2 mol/L begrenzt, um Stromausbeuten von 60 bis 70 % zu gewährleisten.

Zur Erfindung gehört auch eine Vorrichtung zur Herstellung von lithiumhydroxidhaltigen wässrigen Lösungen, umfassend die Komponenten
- ein Membranstack (1), ein Vorratsbehälter (3) für ein verunreinigtes, lithiumhaltiges, wässriges Diluat,
- einen Behälter (4) für eine wässrige Säure,
- einen Sammelbehälter (2) für ein Konzentrat,
wobei der Vorratsbehälter, der Behälter und der Sammelbehälter über kommunizierende Leitungen mit dem Membranstack verbunden sind und der Membranstack über rückläufige kommunizierende Leitungen mit dem Vorratsbehälter, dem Behälter und dem Sammelbehälter verbunden ist und wobei eine Einheit zum Filtrieren zwischen Membranstack und Sammelbehälter (2) für das Konzentrat angeordnet ist, d.h. eine rückläufige kommunizierende Leitung führt vom Membranstack zur Einheit zum Filtrieren und von dieser weiter zum Sammelbehälter.

In einer bevorzugten Ausführung ist jeweils eine Einheit zum Filtrieren zwischen Membranstack und Behälter (4) und / oder zwischen Membranstack und Vorratsbehälter (3) angeordnet.

Membranstack, auch Elektrodialysezelle, bezeichnet im Sinne der Erfindung das Bauteil, in dem die einzelnen lonenaustauschermembranen für die Elektrodialyse enthalten sind. Die Anzahl und Art der eingesetzten Membranen bestimmt, wie viele Kammern im Membranstack gebildet werden. Mindestens enthält der Membranstack eine anionische, eine kationische und eine bipolare Membran, drei Abstandshalter, eine Kathode und eine Anode. Betrachtet man den minimalen Aufbau (3-Kammer-Aufbau) im Membranstack von links nach rechts, so sind die einzelnen Teile in folgender Reihenfolge angeordnet: Anode, Abstandshalter, anionische Membran, Abstandshalter, kationische Membran, Abstandshalter, bipolare Membran, Kathode. Dem Fachmann sind verschiedene Möglichkeiten, wie eine Dialysezelle aufgebaut sein kann, bekannt. Er kennt die verschiedenen Membranarten und weiß, wie er diese einsetzen muss. Dem Fachmann ist auch bekannt, dass er zur Steigerung der Membranfläche mehrere Membranstacks parallel schalten kann.

Als Membranen für die elektrodialytische bipolare Salzspaltung mit kontinuierlicher Filtration eignen sich industriell verfügbare Anionenaustauschermembranen (u. a. Neosepta® AMX oder Neosepta® ACS (für einwertige Anionen bevorzugt) Tokuyama Corporation; Selemion AMV Asahi Glass; PC Acid 100 oder PC Acid 60 (für einwertige Anionen bevorzugt) PCCell GmbH; fumasep® FAB FuMA-Tech GmbH), Kationenaustauschermembranen (u. a. Neosepta® CMX oder Neosepta® CMS (für einwertige Anionen bevorzugt) Tokuyama Corporation; Selemion CMV Asahi Glass; fumasep® FKB FuMA-Tech GmbH) und bipolare Membranen (u. a. Neosepta® BP1 Tokuyama Corporation; fumasep® FBM FuMA-Tech GmbH). Als Elektrodenmaterialien werden gängige Werkstoffe, wie u. a. Raney-Nickel oder platiniertes Titan, eingesetzt.

Dem Fachmann sind verschiedene Arten von Vorratsbehältern, Behältern und Sammelbehältern zum Aufbewahren von wässrigen Flüssigkeiten bzw. Lösungen bekannt. Wässrige Flüssigkeiten bzw. Lösungen bezeichnen erfindungsgemäß die lithiumhydroxidhaltige wässrige Lösung, die wässrige Säure und/oder das Konzentrat. Vorteilhaft sind der Vorratsbehälter, der Sammelbehälter und der Behälter inert gegenüber den wässrigen Flüssigkeiten bzw. Lösungen, so dass diese auch bei längerer Lagerung nicht verändert wird. Das Fassungsvermögen der drei Gefäße wird der Fachmann entsprechend des Volumens der wässrigen Flüssigkeiten bzw. Lösungen auswählen.

Vorteilhaft sind der Vorratsbehälter, der Sammelbehälter und der Behälter der Vorrichtung über Leitungen kommunizierend mit dem Membranstack verbunden, wodurch es ermöglicht wird, die drei Prozessströme (Diluat, Säure und Konzentrat) vom Vorratsbehälter, dem Sammelbehälter und dem Behälter jeweils zum Membranstack und vom Membranstack zurück zum Vorratsbehälter, Sammelbehälter und Behälter zu transportieren. Somit entstehen drei voneinander getrennte Prozessströme, die in sich abgeschlossen kontinuierlich transportiert werden können.

Dem Fachmann sind verschiedene Einrichtungen zum Transport von wässrigen Flüssigkeiten bzw. Lösungen in kommunizierenden Leitungen bekannt. Beispielsweise können verschiedene (Förder-)pumpen (6) verwendet werden. Gängige, dem Fachmann bekannte Pumpen zum Transport von Flüssigkeiten durch Leitungssysteme sind beispielsweise Dosierpumpen, die unabhängig von den Druckverhältnissen vor und nach der Dosierpumpe definierte Volumina pro Umdrehung, Hub oder Zeit transportieren können. Zu den Dosierpumpen zählen beispielsweise Hubkolbenpumpen, Schlauchpumpen, Membranpumpen und Zahnradpumpen. Der Fachmann wird für jede Trennvorrichtung die geeignete Pumpe auswählen. Vorteilhaft kann durch die Wahl einer geeigneten Einheit zum Transport von wässrigen Flüssigkeiten bzw. Lösungen durch die Leitungen ein konstanter Volumenstrom und eine gewünschte Durchflussrate der ionenhaltigen Lösung eingestellt werden. Die Durchflussrate bezeichnet das Volumen an ionenhaltiger Lösung, welche sich in einer Zeitspanne durch einen Querschnitt bewegt.

Bevorzugt sind die Leitungen ausgewählt aus Glasrohren, Kunststoffschläuchen und/oder Metallschläuchen.

Vorteilhaft ist die Leitung inert gegenüber den wässrigen Flüssigkeiten bzw. Lösungen, so dass diese auch bei längerem Kontakt mit den wässrigen Flüssigkeiten bzw. Lösungen nicht verändert werden.

Dem Fachmann sind die verschiedenen Arten von Kunststoff- und Metallschläuchen bekannt. Gängige Schläuche sind beispielsweise PVC-Schläuche ohne Gewebe, PVC-Schläuche mit Gewebe, Polyethylenschläuche, Polyamidschläuche, Polyurethanschläuche und Spiraldruck- und Saugschläuche aus beispielsweise Polyurethan, Polyamid, Polyvinylchlorid (PVC) oder Metall. Der Fachmann wird für die jeweilige Vorrichtung den passenden Schlauch auswählen.

In einer besonderen Ausgestaltung der Erfindung ist die Einheit zum Filtrieren zwischen Membranstack und Vorratsbehälter angeordnet, d. h. eine rückläufige kommunizierende Leitung führt vom Membranstack zur Einheit zum Filtrieren und von dieser weiter zum Vorratsbehälter.

In einer besonderen Ausgestaltung der Erfindung ist eine Einheit zum Filtrieren zwischen Membranstack und Behälter angeordnet, d. h. eine rückläufige kommunizierende Leitung führt vom Membranstack zur Einheit zum Filtrieren und von dieser weiter zum Behälter.

In einer vorteilhaften Ausgestaltung der Erfindung ist die Einheit zum Filtrieren zwischen Membranstack und Vorratsbehälter und/oder Behälter angeordnet, d. h. eine rückläufige kommunizierende Leitung führt vom Membranstack zur Einheit zum Filtrieren und von dieser weiter zum Vorratsbehälter und/oder Behälter.

Bevorzugt ist die Einheit zum Filtrieren (5) eine Fritte mit einer Porengröße von 10 bis 100 µm, besonders bevorzugt von 16 bis 40 µm.

Dem Fachmann sind die verschiedenen Fritten(-arten) mit verschiedenen Porengrößen bekannt. Er kennt die Klassifizierung der Fritten nach ISO (ISO-Kennzeichnung) und wird je nach Kristallgröße (Korngröße) der abzutrennenden Substanz(en) eine geeignete Fritte wählen.

Bevorzugt weist die Einheit zum Filtrieren eine möglichst große Filterfläche (8) und abnehmbare Endkappen zur leichten Feststoffentnahme bzw. Filterreinigung auf, welche durch Glasflansche montiert werden. Die Filtereinheit zeigt in Verbindung mit monoselektiven Kationenaustauschermembranen, wie die Neosepta® CMS (Tokuyama Corporation), die besten Resultate.

Bevorzugt weist die Vorrichtung mindestens zwei parallel geschaltete Einheiten zum Filtrieren auf.

Dazu verläuft die rückläufige kommunizierende Leitung vom Membranstack über einen Verteiler, wodurch die rückläufige kommunizierende Leitung zu mindestens zwei rückläufigen kommunizierenden Teilleitungen wird, die jeweils über eine Einheit zum Filtrieren über ein Ventil zum Sammelbehälter, Vorratsbehälter und/oder Behälter führen.

Verteiler bezeichnet erfindungsgemäß ein Bauteil, wie beispielsweise ein T-Stück, an dem drei Leitungen angeschlossen sind und somit eine Lenkung der wässrigen Flüssigkeiten bzw. Lösungen in Form eines Flüssigkeitsstromes in eine der mindestens zwei rückläufigen kommunizierenden Teilleitung erfolgt. Ein anderer Verteiler ist ein Hahn, der beispielsweise als Zwei-, Drei- bzw. Mehrwegehahn ausgestaltet sein kann, wodurch die wässrigen Flüssigkeiten bzw. Lösungen über einen bestimmten Zeitraum über eine rückläufig kommunizierende Teilleitung und zeitlich darauffolgend über eine zweite rückläufig kommunizierende Teilleitung gelenkt werden kann. Der Fachmann wird einen geeigneten Hahn auswählen.

Vorteilhaft wird dadurch eine kontinuierliche Filtration des mindestens einen Prozessstromes ermöglicht. Vermindert sich durch Feststoffablagerungen der Durchfluss einer Einheit zum Filtrieren, kann im laufenden Betrieb durch Umschalten des Verteilers die Flüssigkeit bzw. Lösung über die zweite rückläufig kommunizierende Teilleitung auf die zweite Einheit zum Filtrieren gelenkt werden.

Ventil bezeichnet erfindungsgemäß ein Bauteil zum Unterbrechen oder Regeln des Durchflusses der Flüssigkeiten bzw. Lösungen. Dem Fachmann sind verschiedene Ventile bekannt. Vorteilhaft können jeweils alle Ventile geschlossen werden, die Einheiten zum Filtrieren nachgeschalten sind, über die gerade keine Flüssigkeit bzw. Lösung gelenkt wird.

Bevorzugt ist der mindestens einen Einheit zum Filtrieren eine Vakuumpumpe (7) nachgeschaltet. Dem Fachmann sind verschiedene Arten von Vakuumpumpen und deren Verwendung bekannt. Vorteilhaft kann so die Filtration unter vermindertem Druck erfolgen.

### Ausführungsbeispiele

Anhand der aufgeführten Darstellungen und Ausführungsbeispiele soll die Erfindung näher erläutert werden ohne sie auf diese zu beschränken. Dabei zeigen
- **Fig. 1**: eine schematische Darstellung der Membrananordnungen im Membranstack einer 3-Kammer-Elektrodialyse zur bipolaren Salzspaltung von Lithiumchlorid (2) zu Lithiumhydroxid (1) und Salzsäure (3),
- **Fig. 2**: eine schematische Darstellung der Elektrodialyse mit Membranstack (Fig. 1) und kontinuierlicher Feststoffabtrennung in den Filtrationseinheiten im Lithiumhydroxidkreislauf (2), und
- **Fig. 3**: eine schematische Darstellung einer Filtrationseinheit mit Frittenboden G3 (16-40 µm) als Filtermedium zur Hydroxidabtrennung.

### Ausführungsbeispiel 1

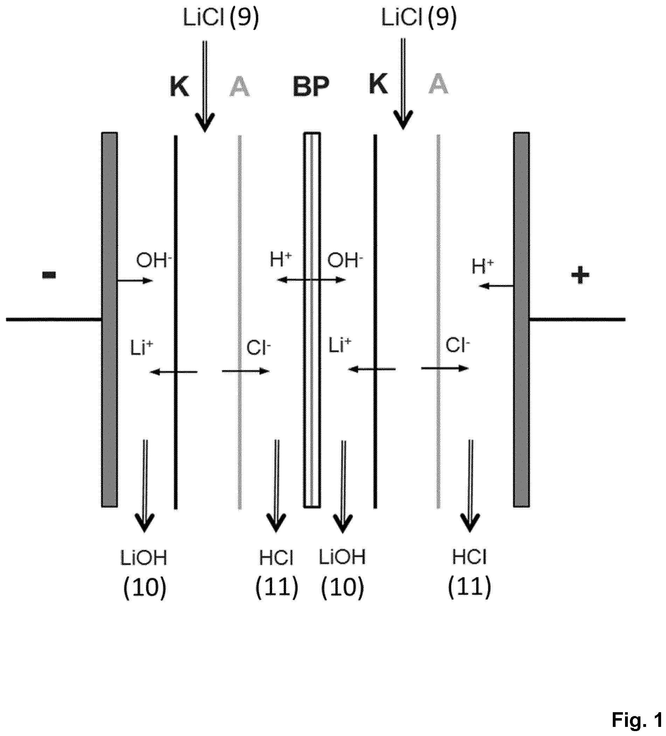

Figur 1 zeigt einen möglichen Aufbau eines Membranstacks. Hierbei kommen neben Kationenaustauschermembranen (K), welche eine hohe Selektivität für Kationen (Li⁺, H⁺) aufweisen und Anionen im hohen Maße zurückhalten, und Anionenaustauschermembranen (A), welche eine hohe Selektivität für Anionen (OH⁻, Cl⁻) aufweisen und Kationen im hohen Maße zurückhalten, auch bipolare Membranen (BP) zum Einsatz. Das wesentliche Merkmal der Elektrodialyse mit bipolaren Membranen ist die Kombination der konventionellen Elektrodialyse bei der Abtrennung eines Salzes und der elektrodialytischen Wasserdissoziation bei der Überführung des Salzes in seine korrespondierende Säure und Base. Bipolare Membranen (BP) induzieren die Dissoziation von Wasser in Protonen und Hydroxid-Ionen. Alle Membranen sind mit Platzhaltern (1 bis 10 mm Dicke) voneinander getrennt. Je nach Einbaurichtung werden durch die Platzhalter die benötigten Kreisläufe für Lithiumchlorid (9), Lithiumhydroxid (10) und Salzsäure (11) realisiert. Das für den lonenfluss benötigte elektrische Feld wird durch Anlegen einer Spannung zwischen Minuspol (Kathode) und Pluspol (Anode) realisiert. Im elektrischen Feld wandern Anionen (OH⁻, Cl⁻) zur Anode und Kationen (Li⁺, H⁺) zur Kathode.

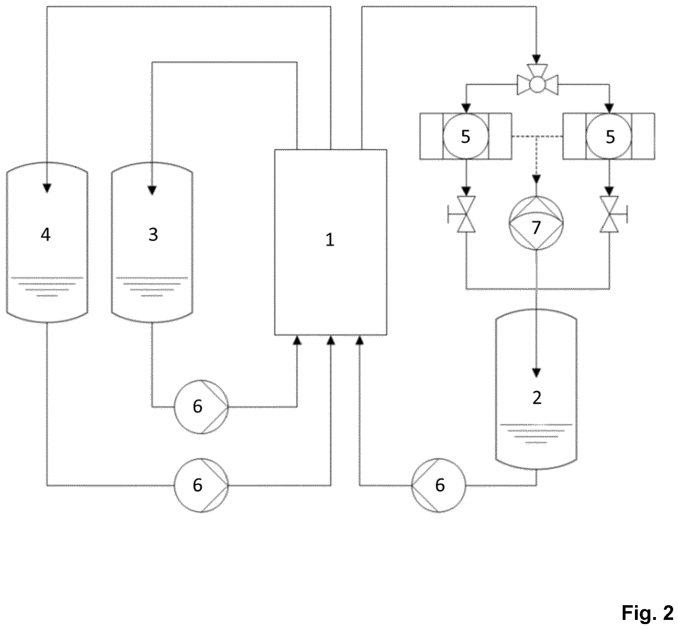

Mindestens ein Kreislauf, vor allem der Lithiumhydroxidkreislauf (10) ist mit einer kontinuierlichen Einheit zum Filtrieren (5) ausgestattet (Fig. 2). Vom Vorratsbehälter (3) wird das Diluat mittels einer Förderpumpe (6) in den Membranstack (1) gepumpt und in diesem in die jeweiligen Platzhalter verteilt, wo Ionen abgetrennt (Kreislauf (9)) oder hinein migrieren (Lithiumhydroxid (10) und Salzsäure (11)). Nach Durchlaufen des Membranstacks wird die Lithiumhydroxidlösung in eine der mittels 3-Wege-Hahn steuerbaren Einheit zum Filtrieren (5) geleitet. Hierbei wird bevorzugt durch den Einsatz einer Vakuumpumpe (7) eine Vakuumfiltration durchgeführt und die während des Membranstackdurchlaufes gebildeten Hydroxidniederschläge abfiltriert. Die Lösung gelangt anschließend wieder in den Vorratsbehälter und wird erneut über die Förderpumpe (6) dem Membranstack (1) zugeführt. Dieser Vorgang wird solange wiederholt, bis der gewünschte Abreicherungsgrad im Lithiumchloridkreislauf (9) oder die gewünschten Produktkonzentration im Lithiumhydroxid-(10) und Salzsäurekreislauf (11) erreicht werden. Kann die Filtrationseinheit durch eine steigende Filterkuchenstärke den gewünschten Durchfluss nicht mehr realisieren, wird durch Betätigen des 3-Wege-Hahns und des Absperrhahnes der zugesetzten Membraneinheit, diese drucklos aus dem System entfernt, der Feststoff mechanisch abgetrennt und feine Rückstände bevorzugt durch Salzsäure aus dem Prozesskreislauf 11 gereinigt.

Aufgrund der hohen Selektivität gegenüber einwertigen Kationen, welche mäßig bis gut wasserlösliche Hydroxide bilden, werden in jedem Umlauf des Basenprozesskreislaufes (10) durch den Membranstack (1) nur geringfügige Mengen an mehrwertigen Kationen, welche überwiegend schwerlösliche Metallhydroxide bilden, angereichert. Nach Erreichen der Sättigungskonzentration kommt es zu Hydroxidausfällungen, welche jedoch nach jedem Umlauf durch den Membranstack dem System durch die Filtration entzogen werden. Eine stetig steigende Anreicherung von Feststoffen im Basenprozesskreislauf und somit zunehmendes Membranscaling wird dauerhaft verhindert.

Nachfolgend sind die Löslichkeiten schwerlöslicher Hydroxidverbindungen sowie die durch das Verfahren tolerierbaren Gehalte bzw. bevorzugt tolerierbaren Gehalte von Metallkationen in der Ausgangslösung aufgeführt:

| **Verbindung** | **Fe(OH)₃** | **Cu(OH)₂** | **Fe(OH)₂** | **Al(OH)₃** | **Mn(OH)₂** | **Mg(OH)₂** |
|---|---|---|---|---|---|---|
| Löslichkeit bei 20 °C [mg/L] | 0,000021 | 0,02 | 0,52 | 1,0 | 3,2 | 9,6 |
| **Kation** | **Fe³⁺** | **Cu²⁺** | **Fe²⁺** | **Al³⁺** | **Mn²⁺** | **Mg²⁺** |
| Tolerierbarer Gehalt [ppm] | < 200 | < 200 | < 200 | < 500 | < 1000 | < 2000 |
| Bevorzugt tolerierbarer Gehalt [ppm] | < 50 | < 50 | < 50 | < 100 | < 200 | < 400 |

### Ausführungsbeispiel 2 - Gewinnung von lithiumhydroxidhaltiger Lösung unter Abtrennung von schwerlöslichen Metallhydroxiden aus lithiumsulfathaltigen Lösungen primären Ursprungs.

Ausgangsstoff des Verfahrens sind lithiumsulfathaltige Lösungen, welche durch hydrometallurgische oder pyrometallurgische Aufschlussverfahren mineralischer Erze, wie Spodumen, Lepidolith, Petalit oder Zinnwaldit, gewonnen werden.

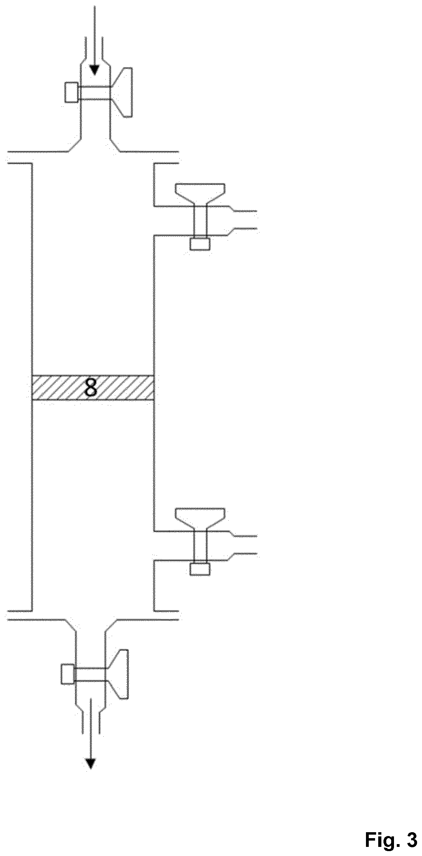

5 Liter einer schwefelsauren wässrigen Aufschlusslösung (pH=2,0), bestehend aus 200 g Lithiumsulfat und 500 mg Eisen(III)-sulfat als Hauptverunreinigung, werden dem elektrodialytischen Prozess unterzogen. Der Membranstack, ein Typ 100 (Deukum GmbH), wird mit 10 Zellpaaren (0,1 m² Zellpaargesamtfläche) Neosepta® CMS-, AMX- und BP1-Membranen bestückt. Die Filtereinheit (Fig. 3) ist nach Figur 2 in den Gesamtprozess integriert. Bei einem angelegten Druck von 700 mbar wird ein Kreislaufdurchfluss von mindestens 50 L/h erzielt und für alle Kreisläufe übernommen. Bei einer angelegten Spannung von 17 V wird nach einer kurzen Anlaufphase eine Stromstärke von 6,0 A bestimmt. Bei 90 % Li-Umsatz wird der Prozess gestoppt. Aufgrund von nicht zu vernachlässigbarer Hydrathüllenwanderung (mit 1 mol Lithiumsulfat werden 10 mol Wasser durch Lithium und 4 mol durch Sulfat transportiert, J. Kielland, J. Chem. Educ. 1937, 14, 412.) erhöht sich das im Basenkreislauf vorgelegte Wasservolumen von 2,5 L auf 2,8 L, wobei eine Lithiumhydroxid-Konzentration von 1,1 mol/L erreicht wird. Eisen(III) ist im Basenkreislauf und somit im späteren Produkt nicht nachweisbar. Durch die kontinuierliche Filtration konnten 36 mg Eisen(III)-hydroxid abgetrennt werden. Das restliche Eisen(III) verbleibt als Sulfat im Diluat. Im Säurekreislauf werden 1,7 L Wasser vorgelegt. Nach Beendigung des Prozesses wird eine Schwefelsäurekonzentration von 0,9 mol/L bei einem Volumen von 1,8 L bestimmt.

### Ausführungsbeispiel 3 - Gewinnung von lithiumhydroxidhaltiger Lösung unter Abtrennung von schwerlöslichen Metallhydroxiden aus lithiumchloridhaltigen Lösungen primären Ursprungs.

Ausgangsstoff des Verfahrens sind lithiumchloridhaltige Lösungen, welche vorwiegend aus Salaren (u. a. Salar de Uyuni, Bolivien) gewonnen werden.

5 Liter einer wässrigen Aufschlusslösung, bestehend aus 100 g Lithiumchlorid und 900 mg Magnesium(II)-chlorid als Hauptverunreinigung, werden elektrodialytisch umgesetzt. Der Membranstack, ein Typ 100 (Deukum GmbH) wird mit 10 Zellpaaren (0,1 m² Zellpaargesamtfläche) Neosepta® CMX-, AMX- und BP1-Membranen bestückt. Die Filtereinheit (Fig. 3) ist nach Figur 2 in den Gesamtprozess integriert und wird bei einem konstanten Durchfluss von 50 L/h betrieben. Der hierfür benötigte Unterdruck wird während des Prozesses im Bereich von 800 bis 400 mbar angepasst. Bei einer angelegten Spannung von 17 V wird nach einer kurzen Anlaufphase eine Stromstärke von 5,0 A bestimmt. Bei 95 % Li-Umsatz wird der Prozess gestoppt. Aufgrund von nicht zu vernachlässigbarer Hydrathüllenwanderung (mit 1 mol Lithiumchlorid werden 5 mol Wasser durch Lithium und 2 mol durch Chlorid transportiert) erhöht sich das im Basenkreislauf vorgelegte Wasservolumen von 2,0 L auf 2,2 L, wobei eine Lithiumhydroxid-Konzentration von 1,0 mol/L erreicht wird. Magnesium(II)-hydroxid ist im Basenkreislauf mit einem Gehalt von 9,5 mg/L nachweisbar und kann nach Eindampfung und Kristallisation des Lithiumhydroxid-Monohydrats mittels Umkristallisation separiert werden. Durch die kontinuierliche Filtration konnten 502 mg Magnesium(II)-hydroxid abgetrennt werden. Das restliche Magnesium(II) verbleibt als Chlorid im Diluat (45 mg). Im Säurekreislauf werden 2,1 L Wasser vorgelegt. Nach Beendigung des Prozesses wird eine Salzsäurekonzentration von 1,0 mol/L bei einem Volumen von 2,2 L bestimmt.

### Ausführungsbeispiel 4 - Gewinnung von lithiumhydroxidhaltiger Lösung unter Abtrennung von schwerlöslichen Metallhydroxiden aus anfallenden lithiumhaltigen Abwässern bei der Herstellung von Lithiumübergangsmetallphosphaten

Ausgangsstoff des Verfahrens sind lithiumsulfathaltige Abwässer, welche bei der Herstellung von Lithiumeisenphosphat aus Lithiumhydroxid, Phosphorsäure und Eisen(II)-sulfat anfallen.

10 Liter eines lithium- und eisenhaltigen Abwassers, bestehend aus 80 g Lithiumsulfat und 400 mg Eisen(II)-sulfat, werden dem elektrodialytischen Prozess unterzogen. Der Membranstack, ein Typ 100 (Deukum GmbH) wird mit 10 Zellpaaren (0,1 m² Zellpaargesamtfläche) Neosepta® CMS-, AMX- und BP1-Membranen bestückt. Die Filtereinheit (Fig. 3) ist nach Figur 2 in den Gesamtprozess integriert und wird bei einem konstanten Durchfluss von 50 L/h betrieben. Der hierfür benötigte Unterdruck wird während des Prozesses im Bereich von 850...500 mbar angepasst. Bei einer angelegten Spannung von 17 V wird nach einer kurzen Anlaufphase eine Stromstärke von 4,5 A bestimmt. Bei 95 % Li-Umsatz wird der Prozess gestoppt. Aufgrund von Hydrathüllenwanderung erhöht sich das im Basenkreislauf vorgelegte Wasservolumen von 1,0 L auf 1,1 L, wobei eine Lithiumhydroxid-Konzentration von 1,2 mol/L erreicht wird. Eisen(II) ist im Basenkreislauf und somit im späteren Produkt nicht nachweisbar. Durch die kontinuierliche Filtration konnten 63 mg Eisen(II)-hydroxid abgetrennt werden. Das restliche Eisen(II) verbleibt als Sulfat im Diluat. Im Säurekreislauf werden 0,7 L Wasser vorgelegt. Nach Beendigung des Prozesses wird eine Schwefelsäurekonzentration von 0,9 mol/L bei einem Volumen von 0,8 L bestimmt.

### Bezugszeichen

1) Membranstack,
2) Sammelbehälter,
3) Vorratsbehälter,
4) Behälter,
5) Einheit zum Filtrieren,
6) Förderpumpe,
7) Vakuumpumpe,
8) Filterfläche,
9) Lithiumchlorid-Prozesskreislauf (Diluat-Prozesskreislauf),
10) Lithiumhydroxid-Prozesskreislauf (Konzentrat-Prozesskreislauf),
11) Salzsäure-Prozesskreislauf (Säure-Prozesskreislauf).

## Patentansprüche

1. Verfahren zur Herstellung von lithiumhydroxidhaltigen wässrigen Lösungen, bei dem ein verunreinigtes, lithiumsalzhaltiges, wässriges Diluat elektrodialytisch, mittels mindestens einer Elektrodialysezelle, durch dessen Transport über Ionenaustauschmembranen, die sich in der Elektrodialysezelle befinden, unter der Triebkraft eines elektrischen Feldes, in ein lithiumhydroxidhaltiges wässriges Konzentrat und eine Säure getrennt wird, und dabei Diluat, Konzentrat und Säure in drei unabhängigen Prozessströmen im kontinuierlichen Kreislauf geführt werden, **dadurch gekennzeichnet, dass** der Prozessstrom des Konzentrates durch eine Einheit zum Filtrieren gelenkt wird

2. Verfahren nach Anspruch 1, **dadurch gekennzeichnet, dass** der Prozessstrom des Diluats und/oder der Prozessstrom der Säure durch jeweils eine Einheit zum Filtrieren gelenkt werden.

3. Verfahren nach einem der Ansprüche 1 oder 2, **dadurch gekennzeichnet, dass** das lithiumhaltige, wässrige Diluat einen pH-Wert von 0 bis 11 aufweist.

4. Verfahren nach den Ansprüchen 1 bis 3, **dadurch gekennzeichnet, dass** die Prozessströme unter vermindertem Druck kontinuierlich durch die jeweilige Einheit zum Filtrieren geleitet werden.

5. Verfahren nach den Ansprüchen 1 bis 4, **dadurch gekennzeichnet, dass** die Prozessströme jeweils durch eine Fritte mit einer Porengröße von 10 bis 100 µm geleitet werden.

6. Vorrichtung zur elektrodialytischen Herstellung von lithiumhydroxidhaltigen wässrigen Lösungen, umfassend die Komponenten
- ein Membranstack (1), mindestens enthaltend eine anionische, eine kationische und eine bipolare Membran, drei Abstandshalter, eine Kathode und eine Anode,
- ein Vorratsbehälter (3) für ein verunreinigtes, lithiumhaltiges, wässriges Diluat,
- einen Behälter (4) für eine wässrige Säure,
- einen Sammelbehälter (2) für ein Konzentrat,
wobei der Vorratsbehälter, der Behälter und der Sammelbehälter über kommunizierende Leitungen mit dem Membranstack verbunden sind und der Membranstack über rückläufige kommunizierende Leitungen mit dem Vorratsbehälter, dem Behälter und dem Sammelbehälter verbunden ist, **dadurch gekennzeichnet, dass** eine Einheit zum Filtrieren zwischen Membranstack und Sammelbehälter (2) angeordnet ist.

7. Vorrichtung nach Anspruch 6, **dadurch gekennzeichnet, dass** jeweils eine Einheit zum Filtrieren zwischen Membranstack und Behälter (4) und / oder zwischen Membranstack und Vorratsbehälter (3) angeordnet ist.

8. Vorrichtung nach einem der Ansprüche 5 oder 6, **dadurch gekennzeichnet, dass** die Einheit zum Filtrieren eine Fritte ist

9. Vorrichtung nach einem der Ansprüche 5 bis 6, **dadurch gekennzeichnet, dass** die Vorrichtung mindestens zwei parallel geschaltete Einheiten zum Filtrieren aufweist.

## Claims

1. A method for the production of lithiumhydroxide-containing aqueous solutions, wherein a contaminated, lithium-salt-containing, aqueous diluate is separated electrodialytically by means of at least one electrodialysis cell, by its transport through ion-exchange membranes, said ion-exchange membranes being arranged in the electrodialysis cell, by the driving force of an electrical field, into a lithiumhydroxide-containing aqueous concentrate and an acid, wherein diluate, concentrate and acid are carried in three independent process streams in a continuous circuit, **characterized in that** the process stream of the concentrate is directed through a unit for filtration.

2. A method according to claim 1, **characterized in that** the process stream of the diluate and/or the process stream of the acid are directed through a unit for filtration respectively.

3. A method according to any of the claims 1 or 2, **characterized in that** the lithium-containing, aqueous diluate possesses a pH-value of 0 to 11.

4. A method according to any of the claims 1 to 3, **characterized in that** the process streams are directed under reduced pressure continuously through the respective unit for filtration.

5. A method according to any of the claims 1 to 4, **characterized in that** the process streams are directed through a frit with a pore size of 10 to 100 µm.

6. An apparatus for the electrodialytic production of lithiumhydroxide-containing aqueous solutions, comprising the components
- A membrane stack (1) at least comprising an anionic, a cationic and a bipolar membrane, three spacers, a cathode and an anode
- A reservoir (3) for contaminated, lithium containing aqueous diluate
- A tank (4) for an aqueous acid
- A collecting tank (2) for a concentrate
wherein the reservoir, the container and the collecting tank are connected by communicating conduits and the membrane stack is connected to the reservoir, the tank and the collecting tank by reversely communicating conduits, **characterized in that** the unit for filtration is arranged between membrane stack and collecting tank (2).

7. An apparatus according to claim 6, **characterized in that** a unit for filtration is arranged respectively between membrane stack and tank (4) and/or between membrane stack and collecting tank.

8. An apparatus according to any of the claims 5 or 6, **characterized in that** the unit for filtration is a frit.

9. Apparatus according to any of the claims 5 to 6, **characterized in that** the apparatus possesses at least two parallel connected units for filtration.

## Revendications

1. Procédé de préparation de solutions aqueuses contenant de l'hydroxyde de lithium, dans lequel un produit de dilution aqueux impur contenant du sel de lithium est séparé, par voie électrodialytique, au moyen d'au moins une cellule d'électrodialyse, par son transport par des membranes échangeuses d'ions situées dans la cellule d'électrodialyse sous la force motrice d'un champ électrique, en un concentré aqueux contenant de l'hydroxyde de lithium et en un acide, et le produit de dilution, le concentré et l'acide étant ainsi conduits en cycle continu dans trois flux de traitement indépendants, **caractérisé en ce que** le flux de traitement du concentré est dirigé à travers une unité de filtrage.

2. Procédé selon la revendication 1, **caractérisé en ce que** le flux de traitement du produit de dilution et/ou le flux de traitement de l'acide sont dirigés chacun à travers une unité de filtrage.

3. Procédé selon l'une des revendications 1 ou 2, **caractérisé en ce que** le produit de dilution aqueux contenant du lithium présente un pH compris entre 0 et 11.

4. Procédé selon les revendications 1 à 3, **caractérisé en ce que** les flux de traitement sont dirigés continuellement à travers l'unité de filtrage respective, sous pression réduite.

5. Procédé selon les revendications 1 à 4, **caractérisé en ce que** les flux de traitement sont acheminés chacun à travers une fritte d'une taille de pore comprise entre 10 et 100 µm.

6. Dispositif de préparation électrodialytique de solutions aqueuses contenant de l'hydroxyde de lithium, comprenant les composants suivants
- un empilement de membranes (1) contenant au moins une membrane anionique, une membrane cationique et une membrane bipolaire, trois espaceurs, une cathode et une anode,
- un récipient de stockage (3) pour un produit de dilution aqueux impur contenant du lithium,
- un récipient (4) pour un acide aqueux,
- un récipient collecteur (2) pour un concentré,
le récipient de stockage, le récipient et le récipient collecteur étant reliés à l'empilement de membranes par des conduites de communication, et l'empilement de membranes étant relié au récipient de stockage, au récipient et au récipient collecteur par des conduites de communication de retour, **caractérisé en ce qu'**une unité de filtrage est disposée entre l'empilement de membranes et le récipient collecteur (2).

7. Dispositif selon la revendication 6, **caractérisé en ce qu'**une unité de filtrage est disposée à chaque fois entre l'empilement de membranes et le récipient (4) et/ou entre l'empilement de membranes et le récipient de stockage (3).

8. Dispositif selon l'une des revendications 5 ou 6, **caractérisé en ce que** l'unité de filtrage est une fritte.

9. Dispositif selon l'une des revendications 5 à 6, **caractérisé en ce que** le dispositif présente au moins deux unités de filtrage connectées en parallèle.
